(19) Europäisches Patentamt
European Patent Office
Office européen des brevets

(11) EP 0 795 777 A2

(12) EUROPEAN PATENT APPLICATION

(43) Date of publication:
17.09.1997 Bulletin 1997/38

(51) Int Cl.$^6$: G02F 1/141

(21) Application number: 97301704.9

(22) Date of filing: 13.03.1997

(84) Designated Contracting States:
DE FR GB

(30) Priority: 15.03.1996 JP 58666/96

(71) Applicant: MITSUBISHI GAS CHEMICAL COMPANY, INC.
Tokyo, 100 (JP)

(72) Inventors:
- Masahiro, Johno
Tsukuba-shi, Ibaraki-ken (JP)
- Takahiro, Matsumoto
Tsukuba-shi, Ibaraki-ken (JP)
- Tomoyuki, Yui
Tsukuba-shi, Ibaraki-ken (JP)
- Maki, Ito
Tsukuba-shi, Ibaraki-ken (JP)

(74) Representative: Nicholls, Michael John et al
J.A. KEMP & CO.
14, South Square
Gray's Inn
London WC1R 5LX (GB)

# (54) Liquid crystal display device

(57) An active matrix liquid crystal display device having a rapid optical response and being a wide viewing angle, the device comprising two glass plates and an insulator layer formed of an insulator film and an alignment film, the insulator layer being formed on each glass plate, wherein an pixel electrode and an active device connected to the pixel electrode are arranged, in a matrix state, on a first glass plate and a common electrode opposite to the pixel electrodes is arranged on a second glass plate, out of the two glass plates; a gap between the first glass plate and the second glass plate is 1 to 3 μm, a liquid crystal having a layer structure is filled in the gap, the liquid crystal is a ferrielectric liquid crystal or a ferrielectric liquid crystal composition which can change among a co-present state of two ferrielectric phases, two ferroelectric states and an intermediate state therebetween by an action of an electric field when a voltage is applied between the pixel electrode and the common electrode; crossed polarizers are arranged on the first glass plate and the second glass plate so as to bring the two ferroelectric states into a light state; and an analog gray-scaling display is performed on the basis of a voltage change with a small width of hysteresis between a change from a ferrielectric state to a ferroelectric state and a change from a ferroelectric state to a ferrielectric state and without a threshold, by controlling a voltage applied between the pixel electrode and the common electrode.

FIG. 1

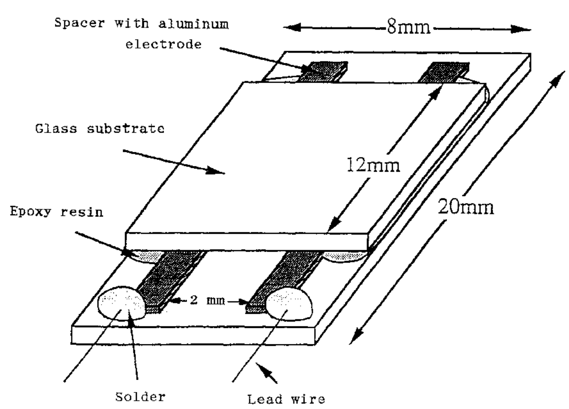




Printed by Jouve, 75001 PARIS (FR)

## Description

The present invention relates to an active matrix type liquid crystal display device in which a ferrielectric liquid crystal or a ferrielectric liquid crystal composition is connected to pixel electrodes and each pixel is driven by means of an active device such as a thin film transistor or diode.

Liquid crystal display devices (LCD) as flat panel displays are already superseding conventional Braun tube displays (CRT) mainly in the fields of portable machines and equipment. With the recent functional extension of personal computers and word processors and with the recent increase in the volume of data processing, LCD is also required to have high functions such as a higher display capacity, full-color display, a wide viewing angle, a high-speed response and a higher contrast.

As a liquid crystal display mode (liquid crystal driving method) to meet with the above requirements, there is proposed and practically used an active matrix (AM) display device which works by a method in which thin film transistors (TFT) or diodes (MIM) are formed such that one transistor or diode corresponds to one pixel on a display screen and a liquid crystal is driven for each pixel independently of every other one. The above display mode has problems in that it is difficult to decrease a cost due to a low yield and that it is difficult to provide a large display screen. However, due to a high display quality, the above display mode is about to surpass an STN mode which has been a conventional mainstream and to overtake CRT.

Problems to be Solved by the Invention:

However, the above AM display device has the following problems since it uses a TN (twisted nematic) liquid crystal as a liquid crystal material.

(1) A TN liquid crystal is a nematic liquid crystal, and the response speed is generally low (tens ms). No good display quality can be obtained for the video frame rate display.
(2) A twisted state (twist alignment) of liquid crystal molecules is used for displaying, and the viewing angle is therefore narrow. In a gray-scaling display in particular, the viewing angle is sharply narrowed. That is, the contrast ratio and- the color change depending upon viewing angles to a display screen.

For overcoming the above problems, in recent years, there have been proposed AM panels which use a ferroelectric liquid crystal or an anti-ferroelectric liquid crystal in place of the TN liquid crystal (see Japanese Laid-open Patent Publications Nos. 249502/1993, 150257/1993 and 95080/1994). However, these AM panels have not yet been practically used due to the following problems.

(1) A ferroelectric liquid crystal has spontaneous polarization. An image sticking is liable to take place due to constant presence of the spontaneous polarization, and the driving is made difficult. In a surface-stabilized ferroelectric liquid crystal device which is of a general display mode, it is very difficult to perform a gray-scaling display since only a binary display of black and white is possible in principle. For a gray-scaling display, a special devising is required (e.g., ferroelectric liquid crystal device using monostability; Keiichi NITO et al., SID '94, Preprint, p.48), and development of a very high technique is required.
(2) An anti-ferroelectric liquid crystal is free of the problem of image sticking described in the above (1) since it has no permanent spontaneous polarization. However, the anti-ferroelectric liquid crystal generally shows a high threshold voltage, and it is therefore difficult to drive it at a low voltage. Further, it has a problem that a gray-scaling display is difficult since its optical response involves a hysteresis.

It is an object of the present invention to overcome the above problems and provide an active matrix liquid crystal device having a higher display quality. The object of the present invention is achieved by sandwiching a ferrielectric liquid-crystal for each pixel between plates provided with non-linear active devices such as thin film transistors or diodes.

A ferrielectric phase was found in 4-(1-methylheptyloxycarbonyl)phenyl 4-(4-octylphenyl)benzoate (to be abbreviated as "MHPOBC" hereinafter) in 1989 for the first time (Japanese Journal of Applied Physics, Vol. 29, No. 1, 1990, pp. L131 - 137).

MHPOBC has the following structural formula and phase sequence.

<u>Structure formula:</u>

$$C_8H_{17}\text{-O-Ph-Ph-COO-Ph-COO-C*H}(CH_3)C_6H_{13}$$

wherein an alkyl group at each of both the terminals is linear, -Ph- is a 1,4-phenylne group and C* is an asymmetric carbon.

Phase sequence:

$$Cr(30)SIA^*(65)SCA^*(118)SC\gamma^*(119)SC^*(121)SC\alpha^*(122)SA(147)I$$

wherein Cr is a crystal phase, SIA* is an antiferroelectric smectic I phase, SCA* is a chiral smectic CA phase (antiferroelectric phase), SCγ* is a chiral smectic Cγ phase [ferrielectric phase), SC* is a chiral smectic C phase (ferroelectric phase), SCα* is a chiral smectic Cα phase, SA is a smectic A phase, I is an isotropic phase, and parenthesized values are phase transition temperatures (°C).

The observation of a conoscopic image is a useful means for determining a ferrielectric phase. Fig. 2 shows conoscopic images of ferroelectric phase (SC*), ferrielectric phase (SCγ*) and anti-ferroelectric phase (SCA*) of the above MHPOBC together with their references. Fig. 2 also shows a conoscopic image of a liquid crystal A used in Example 1 to be described later.

The observation of a conoscopic image was conducted according to a literature (Japanese Journal of Applied Physics, -Vol. 31, No. 6B, 1992, pp. L793 - 796).

Fig. 1 shows a structure of a cell used for the observation of a conoscopic image.

In the structure shown in Fig. 1, a cell gap is 150 μm, and an inter-electrode distance is 2 mm.

In Fig. 2, A-1 shows a conoscopic image of a ferroelectric phase observed at 120°C at an applied voltage of 0 (reference), and A-2 shows a conoscopic image of the ferroelectric phase observed at 120°C at an applied voltage of 80 V.

In Fig. 2, B-1 shows a conoscopic image of a ferrielectric phase observed at 118.5°C at an applied voltage of 0 (reference), and B-2 shows a conoscopic image of the ferrielectric phase observed at 118.5°C at an applied voltage of 50 V.

In Fig. 2, C-1 shows a conoscopic image of an anti-ferroelectric phase observed at 117°C at an applied voltage of 0 (reference), and C-2 shows a conoscopic image of the anti-ferroelectric phase observed at 117°C at an applied voltage of 500 V.

In Fig. 2, D-1 shows a conoscopic image of a liquid crystal A of Example 1 observed at 69°C at an applied voltage of 0 (reference), and D-2 shows a conoscopic image of the liquid crystal observed at 69°C at an applied voltage of 2 V.

As described above, A-1, B-1, C-1 and D-1 in Fig. 2 show conoscopic images of those phases taken when no electric field was applied. When no electric filed is applied, major axes of molecules in each phase tilt from a layer normal and has a helical structure. A liquid crystal A is therefore a monoaxial substance of which the optic axis is in parallel with the layer normal, and monoaxial conoscopic images are observed.

On the other hand, A-2, B-2, C-2 and D-2 in Fig. 2 show states in which appropriate electric fields are applied, and conoscopic images peculiar to those phases are observed.

In A-2 in Fig. 2, there are two optic axes in a perpendicular direction to the electric field, and the center of the image shifts in the same direction.

In B-2 in Fig. 2, there are two optic axes in a direction in parallel with the electric field, and the center of the image shifts in a perpendicular direction to the electric field similarly to A-2.

In C-2 in Fig. 2, there are two optic axes in a perpendicular direction to the electric field similarly to A-2, while no shift of the center of the image is found.

In D-2 in Fig. 2, there are two optic axes in a direction in parallel with the electric field, and the center of the image shifts in a perpendicular direction to the electric field. The characteristic feature of this conoscopic image is nearly the same as that of the conoscopic image in B-2, and hence, this phase is determined to be a ferrielectric phase.

For illustrating the behavior of a ferrielectric phase to an applied voltage in a state in which it is enclosed in a liquid crystal cell, Fig. 3 schematically shows a molecular arrangement state in a ferrielectric phase, and Fig. 4 shows an optical response of the ferrielectric phase to a triangular wave voltage.

A ferrielectric phase has a molecular arrangement of FI(+) or FI(-) in Fig. 3.

In a state in which no electric filed is applied (applied voltage 0), FI(+) and FI(-) are assumed to be co-present since they are equivalent in molecular orientation to each other. Therefore, average optic axes are in the direction of a layer normal, and the state free of an electric field is in a dark state under the condition of polarizers shown in Fig. 3. This state corresponds to a portion showing a voltage of 0 and a transmittance intensity of 0 in Fig. 4.

Each of FI(+) and FI(-) has spontaneous polarization as is clearly shown by the molecular orientation state, but the spontaneous polarizations are canceled in a state where these are co-present. As a result, an average spontaneous polarization is zero. This shows that a ferrielectric phase is free of an image sticking phenomenon found in ferroelectric phase, like an anti-ferroelectric phase.

When a voltage applied to a ferrielectric phase is increased, one domain having an extinguished position appears between the direction of a layer normal and the direction of an optic axis in a ferroelectric state. This shows that the above domain has an optic axis in the direction which tilts from the direction of a layer normal although the tilt is not so large as that in a ferroelectric state. This intermediate state is considered to be FI(+) or FI(-).

In the above case, a change in transmittance intensity observed between voltages of 0 and 4 V in Fig. 4 should be not to be continuous but to be stepwise. As shown in Fig. 4, however, a continuous change in transmittance intensity is observed. This is presumably because the threshold in a change from FI(+) to FI(-) is not sharp, i.e., because no threshold is shown.

Further, when an electric field is applied to a ferrielectric phase, the ferrielectric phase undergoes a phase transition to a ferroelectric phase FO(+) or FO(-) which is a stable state, depending upon a direction of the electric field. That is, a portion in which the transmittance intensity is brought into a saturated state (flat portions on left and right sides) in Fig. 4 is FO(+) or FO(-).

Both the ferroelectric states are in a light state under the condition of polarizers shown in Fig. 3.

As explained above, in the ferrielectric phase, a state where FI(+) and FI(-) are co-present is used as dark, and ferroelectric states FO(+) and FO(-) are used as light.

A conventional ferroelectric phase uses a switching between two states of FO(+) and FO(-), while the ferrielectric phase has a major characteristic feature in switching among four states of FO(+), FI(+), FI(-) and FO(-).

These display principles based on liquid crystal phases utilize birefringence of a liquid crystal, and when the ferrielectric phase is used, a display device having a less dependency upon a viewing angle can be produced.

As shown in Fig. 4, the ferrielectric phase generally shows a small difference between the voltage for a change from a ferrielectric state to a ferroelectric state and the voltage for a change from a ferroelectric state to a ferrielectric state. That is, a ferrielectric phase has a strong tendency that the width of its hysteresis is narrow, and the ferrielectric phase has a characteristic suitable for AM driving and a gray-scaling display in AM driving.

Further, in the ferrielectric phase, the voltage required for a change from a ferrielectric state to a ferroelectric state (to be referred to as "switching voltage" hereinafter) tends to be low in a voltage change as compared with an anti-ferroelectric liquid crystal, and it can be also said from this point that the ferrielectric phase is suitable for AM driving.

For obtaining a small width of hysteresis, a sufficiently low switching voltage and a good dark state at an applied voltage of 0 which state has a large effect on a contrast, however, the characteristics inherent to the ferrielectric phase are not sufficient, and it is required to optimize a liquid crystal cell for AM driving.

Means to Solve the Problems:

The present invention is concerned with the formation of an AM driving device suitable for the AM-driving of the ferrielectric phase.

According to the present invention, there is provided an active matrix liquid crystal display device comprising two glass plates and an insulator layer formed of an insulator film and an alignment film, the insulator layer being formed on each glass plate,

wherein:

an pixel electrode and an active device connected to the pixel electrode are arranged, in a matrix state, on a first glass plate and a common electrode opposite to the pixel electrodes is arranged on a second glass plate, out of the two glass plates,

a gap (cell-gap) between the first glass plate and the second glass plate is 1 to 3 μm, a liquid crystal having a layer structure is filled in the gap, the liquid crystal is a ferrielectric liquid crystal or a ferrielectric liquid crystal composition which can change among a co-presence state of two ferrielectric phases, two ferroelectric states and an intermediate state therebetween by an action of an electric field when a voltage is applied between the pixel electrode and the common electrode,

crossed polarizers are arranged on the first glass plate and the second glass plate so as to bring the two ferroelectric states into a light state, and

an analog gray-scaling display is performed on the basis of a voltage change with a small width of hysteresis between a change from a ferrielectric state to a ferroelectric state and a change from a ferroelectric state to a ferrielectric state and without a threshold, by controlling a voltage applied between the pixel electrode and the common electrode.

The-above gap (cell gap) between the first glass plate and the second glass plate is concerned with optical leakage at an applied voltage of 0 and hysteresis. With an increase in the gap between the plates, the optical leakage at an applied voltage of 0 tends to increase, and the hysteresis tends to increase. The optical leakage at an applied voltage of 0 has a great influence on a contrast, and the smaller the optical leakage is, the more preferred it is. In view of these

points, the gap between the plates is 1 to 3 μm, preferably 1 to 2 μm.

In the present invention, the capacitance of the insulator layer formed on the plate is related to the hysteresis and to a voltage which is changed from a co-present state of two ferrielectric phases to a ferroelectric state and a voltage which is changed from a ferroelectric state to a co-present state of two ferrielectric phases. The hysteresis has a tendency that it is large when the capacitance of the insulator layer is large and that it decreases with a decrease in the capacitance.

On the other hand, the switching voltage tends to increase with a decrease in the capacitance of the insulator layer (an increase in the thickness of the insulator layer).

The capacitance of the insulator layer is expressed by the following equation.

$$C = \varepsilon \cdot \varepsilon_0 \cdot S/d$$

in which C is a capacitance (pF), ε is a dielectric constant of an insulator layer, $\varepsilon_0$ is a dielectric constant in vacuum (0.088542 pF/cm), S is an area ($cm^2$), and d is a thickness (cm) of an insulator layer.

The capacitance of the insulator layer can be evaluated on the basis of a parameter P of the following equation.

$$P = d/\varepsilon$$

in which d and ε are as defined above.

In view of both the hysteresis and the switching voltage, the value of P is preferably 10 to 24 nm, particularly preferably 13 to 20 nm.

The insulator film formed on the plate may be a generally used insulator layer. Specific examples thereof include films formed of $SiO_2$, $ZrO_2$ or $Al_2O_3$.

The thickness of the insulator layer formed of the insulator film and the alignment film is preferably 60 to 90. nm.

For producing a more practical device, it is essential that the liquid crystal device can be driven at a lower voltage. From this viewpoint, when the transmission of the two ferroelectric states is taken as 100 % and when the lowest transmission of the co-present state of two ferrielectric phases is taken as 0 %, it is preferred that the voltage at a transmission of 90 % at a change of the ferrielectric liquid crystal or the ferrielectric liquid crystal composition from a state where the two ferrielectric phases are co-present to a ferroelectric state (the above voltage to be referred to as "U90" hereinafter) and the voltage at a transmission of 90 % at a change of the ferrielectric liquid crystal or the ferrielectric liquid crystal composition from the ferroelectric state to a state where the two ferrielectric phases are co-present (the above voltage to be referred to as "D90" hereinafter) are 5 V or lower, and a difference between these voltages (between U90 and D90) is 0.6 V or lower.

As a ferrielectric liquid crystal or ferrielectric liquid crystal composition in the present invention, preferred is a ferrielectric liquid crystal compound having the following formula (1) or a ferrielectric liquid crystal composition containing the above ferrielectric liquid crystal.

The helical pitch of the above ferrielectric liquid crystal or the above ferrielectric liquid crystal composition is at least 1 μm, more preferably at least 1.5 μm.

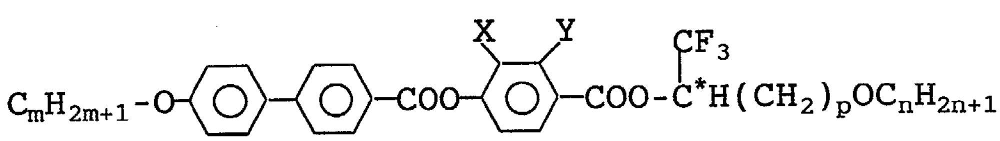

(1)

in which m is 9 to 12, p is 2 to 4, n is 2 to 4, and each of X and Y is a hydrogen atom, or one of X and Y is a fluorine atom and the other is a hydrogen atom.

The ferrielectric liquid crystal compound of the above formula (1) may be used alone, while it may be used as a ferrielectric liquid crystal composition containing the ferrielectric liquid crystal compound of the above formula (1) and other compound. The content of the ferrielectric liquid crystal compound of the above formula (1) in the above composition is generally at least 60 mol%, preferably at least 80 mol%. Examples of the "other compound" include

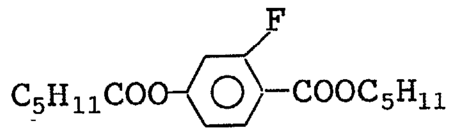,

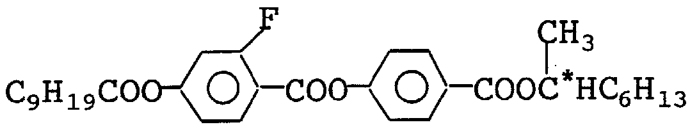

or

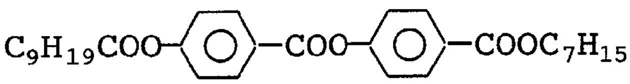.

Effect of the Invention

An AM driving liquid crystal display device having a rapid response and a wide viewing angle can be provided by setting a proper insulator layer, a proper thickness thereof and a proper cell gap (gap between glass plates) in an AM driving liquid crystal display device filled with the ferrielectric liquid crystal or the ferrielectric liquid crystal composition.

The present invention will be explained in detail with reference to Examples hereinafter, while the present invention shall not be limited to these Examples.

Referential Example 1

As a liquid crystal compound having a ferrielectric phase, 4-(1-methylheptyloxycarbonyl)phenyl 4-(4-octylphenyl) benzoate was used.

The above compound has a structural formula and phase transition temperatures (°C) as shown below. It is described in Japanese Journal of Applied Physics, Vol. 31, No. 6B, 1992, pp. L793-796 that the above compound shows a ferrielectric phase.

Structural formula:

$$C_8H_{17}\text{-Ph-Ph-COO-Ph-COO-C*H}(CH_3)C_6H_{13}$$

in which an alkyl group at each of both the terminals is linear, Ph is a 1,4-phenylne group and C* is an asymmetric carbon.

Phase sequence:

$$I(109.0)SA(76.3)SC\alpha^*(72.1)AF^*(66.4)SC\gamma^*(64.9)SCA^*$$

in which I is an isotropic phase, SA is a smectic A phase, SCα* is a chiral smectic Cα phase, AF* is an anti-ferroelectric phase having a molecular arrangement different from that of SCA*, SCγ* is a chiral smectic Cγ phase (ferrielectric phase), SCA* is a chiral smectic CA phase (anti-ferroelectric phase), and parenthesized values are transition temperatures (°C)at the falling temperature.

The above liquid crystal in a parallel-aligned cell was examined for an electro-optical response in a ferrielectric phase. The cell was prepared in the following procedures.

Glass plates with ITO electrode were coated with polyimide (thickness: about 30 nm, dielectric constant: 3.2), and one of a pair of the glass plates was rubbed. A pair of the glass plates were assembled by a spacer having a particle diameter of 1.6 µm, to obtain a test cell possessing a certain cell gap.

The parameter P for the capacitance of the insulator layer of the above cell was 9.4 nm. The cell gap between the glass plates was 2 µm.

The liquid crystal was heated up to a temperature at which the liquid crystal had an isotropic phase, and then liquid crystal was injected into the test cell by a capillary phenomenon. Then, the test cell was gradually cooled at a rate of 1°C/minute to obtain parallel-alignment of the liquid crystal. Further, the liquid crystal was cooled to 65.5°C (ferrielectric phase).

The test cell was driven by applying a triangular wave voltage of ±10 V and 30Hz, to study a change in optical transmission. Fig. 4 shows the results. The voltage at which the intensity of transmission was 90 % was as small as 2.5 V, and the hysteresis in optical response was also relatively small.

The above results show that the ferrielectric phase is suitable for AM driving.

Referential Examples 2 and 3

The hysteresis in optical responses of the liquid crystals was studied in the same manner as in Example 1 except that a ferroelectric liquid crystal compound (B) having the following chemical structural formula or an anti-ferroelectric liquid crystal compound (C) having the following chemical structural formula was used as the liquid crystal.

<u>Liquid crystal compound B:</u>

$C_8H_{17}$-O-Ph-Ph-COO-Ph(3F)-COO-C*H($CF_3$)($CH_2$)$_3$O$C_2H_5$ (Fig. 5)

<u>Liquid crystal compound C:</u>

$C_9H_{19}$-O-Ph-Ph-COO-Ph(3F)-COO-C*H($CF_3$)($CH_2$)$_5$O$C_2H_5$ (Fig .6)

In the above formulas, Ph is a 1,4-phenylene group, Ph(3F) is a 1,4-phenylene group having F substituted on its 3-position, and C* is asymmetric carbon.

The ferroelectric liquid crystal compound (B) showed a W-letter-shaped hysteresis and a high transmission at a voltage of 0. Further, the anti-ferroelectric liquid crystal compound (C) showed a clear hysteresis. That is, the optical response of each of the above compounds was not suitable for AM driving.

Examples 1 and 2, and Comparative Examples 1 and 2

Each surface of glass plates with ITO electrode was coated with $SiO_2$ film to form insulator layers having a thickness of 20 nm each (Example 1), 40 nm (Example 2), 70 nm (Comparative Example 1) or 100 nm (Comparative Example 2). Further, these glass plates were coated with polyimide on both the surfaces each (thickness about 30 nm, dielectric constant 3.2), and one of a pair of the glass plates was rubbed. The parameter P for the capacitance of the insulator layer of each cell was 14.6 nm (Example 1), 19.9 nm (Example 2), 27.8 nm (Comparative Example 1) or 35.7 nm (Comparative Example 2).

Each cell was charged with a ferrielectric liquid crystal (liquid crystal A) having the following chemical structural formula, and studied for an optical response at 50°C in the same manner as in Referential Example 1 (provided that the applied voltage was 25 V and that the frequency was set at 1 Hz). The results are shown in Fig. 7 (Example 1), Fig. 8 (Example 2), Fig. 9 (Comparative Example 1) and Fig. 10 (Comparative Example 2).

<u>Liquid crystal A:</u>

$C_9H_{19}$-O-Ph-Ph-COO-Ph(3F)-COO-C*H($CF_3$)($CH_2$)$_3$O$C_2H_5$

in which Ph is a 1,4-phenylene group, Ph(3F) is a 1,4-phenylene group having F substituted on its 3-position, and C* is asymmetric carbon.

Phase sequence:

$$Cr(34)SC\gamma^*(101)SC\alpha^*(103)I$$

in which parenthesized values are transition temperatures (°C), Cr is a crystal phase, $SC\gamma^*$ is a chiral smectic $C\gamma$ phase (ferrielectric phase), $SC\alpha^*$ is a chiral smetic $C\alpha$ phase, and I is an isotropic phase.

Further, the above liquid crystal A was measured for a helical pitch to be found 1.7 μm.

In the measurement for the helical pitch, an absorption spectrum (selected reflection due to a helical structure) was measured at 35°C with a free standing film (film formed by using glass plate with an 8 mm x 1.5 mm through hole), and the helical pitch was determined on the basis of the following equation.

$$\lambda = P \cdot n$$

($\lambda$: selected reflection wavelength, P: pitch, n: average refractive index (about 1.5)).

In Fig. 7 (Example 1) and Fig. 8 (Example 2), when the transmission of the two ferroelectric states was taken as 100 % and when the lowest transmission was taken as 0 %, both the voltage (U90) at a transmission of 90 % at a change from a state where the two ferrielectric phases were co-present to a ferroelectric state and the voltage (D90) at a transmission of 90 % at a change from the ferroelectric state to a state where the two ferrielectric phases were co-present were 5 V or lower. In particular, in Fig. 7 (Example 1), the above voltages were very low, as low as about 2 V, and in Fig. 8 (Example 2), there was almost no voltage difference between U90 and D90. That is, the cells in Examples 1 and 2 showed the optimum optical responses suitable as AM driving devices.

On the other hand, in Fig. 9 (Comparative Example 1), the voltages U90 and D90 were high, and in Fig. 10 (Comparative Example 2), the voltage difference was large, which data, therefore, were problems in practical use.

Examples 3 and 4

Optical responses were studied in the same manner as in Example 1 except that the thickness of each insulator film of $SiO_2$ was changed to 40 nm and that the cell gap was changed to 1 μm (Example 3) or 3 μm (Example 4).

The results are shown in Fig. 11 (Example 3) and Fig. 12 (Example 4).

In each Example, U90 and D90 were 5 V or less, and the voltage difference was 0.6 V or less which was an allowable range.

Comparative Examples 3 and 4

Optical responses were studied in the same manner as in Example 1 except that the-thickness of each insulator film of $SiO_2$ was changed to 40 nm and that the cell gap was changed to 5 μm (Comparative Example 3) or 10 μm (Comparative Example 4).

The results are shown in Fig. 13 (Comparative Example 3) and Fig. 14 (Comparative Example 4).

With an increase in U90 and D90, the hysteresis increased in width, and the cells tended to show an extreme increase in optical leakage at an applied voltage of 0.

Examples 5 to 7

U90 and D90 were studied by forming an insulator film of $SiO_2$, $ZrO_2$ or $Al_2O_3$ and by setting the thickness of each insulator film so that one of P values was almost the same as the others. Table 1 shows the results.

In each of the insulator films in these Examples, the U90 and D90 values were small, and the width of the hysteresis was also small.

Table 1

| Example No. | Kind of insulator film | Dielectric constant ($\varepsilon$) | Thickness of insulator layer (nm) | P | U90 | D90 |
|---|---|---|---|---|---|---|
| | | | | | (V/μm) | |
| 5 | $SiO_2$ | 3.8 | 40 | 19.9 | 1.9 | 1.8 |
| 6 | $ZrO_2$ | 10 | 100 | 19.4 | 1.6 | 1.0 |

Table 1 (continued)

| Example No. | Kind of insulator film | Dielectric constant (ε) | Thickness of insulator layer (nm) | P | U90 | D90 |
|---|---|---|---|---|---|---|
| | | | | | (V/μm) | |
| 7 | $Al_2O_3$ | 13 | 100 | 17.1 | 1.2 | 1.1 |

Brief Description of Drawings

Fig. 1 is a schematic perspective view of a cell used for the observation of a conoscopic image.

Fig-. 2 show photographs of conoscopic images of ferroelectric phase (SC*), ferrielectric phase (Scγ*) and anti-ferroelectric phase (SCA*) of MHPOBC and photographs of conoscopic images of the liquid crystal A used in Example 1.

Fig. 3 schematically shows a state of molecular arrangement of a ferrielectric phase. FI(+) and FI(-) show ferrielectric states, and FO(+) and FO(-) show ferroelectric states.

Fig. 4 shows an optical response of a ferrielectric liquid crystal compound to a triangular wave voltage.

Fig. 5 shows an optical response of ferroelectric liquid crystal compound B to a triangular wave voltage.

Fig. 6 shows an optical response of anti-ferroelectric liquid-crystal compound C to a triangular wave voltage.

Fig. 7 shows an optical response of ferrielectric liquid crystal compound A to a triangular wave voltage when a cell had an insulator film which was formed of $SiO_2$ and had a thickness of 20.0 nm and had a cell gap of 2 μm.

Fig. 8 shows an optical response of ferrielectric liquid crystal compound A to a triangular wave voltage when a cell had an insulator film which was formed of $SiO_2$ and had a thickness of 40.0 nm and had a cell gap of 2 μm.

Fig. 9 shows an optical response of ferrielectric liquid crystal compound A to a triangular wave voltage when a cell had an insulator film which was formed of $SiO_2$ and had a thickness of 70.0 nm and had a cell gap of 2 μm.

Fig. 10 shows an optical response of ferrielectric liquid crystal compound A to a triangular wave voltage when a cell had an insulator film which was formed of $SiO_2$ and had a thickness of 100.0 nm and had a cell gap of 2 μm.

Fig. 11 shows an optical response of ferrielectric liquid crystal compound A to a triangular wave voltage when a cell had an insulator film which was formed of $SiO_2$ and had a thickness of 40.0 nm and had a cell gap of 1 μm.

Fig. 12 shows an optical response of ferrielectric liquid crystal compound A-to a triangular wave voltage when a cell had an insulator film which was formed of $SiO_2$ and had a thickness of 40.0 nm and had a cell gap of 3 μm.

Fig. 13 shows an optical response of ferrielectric liquid crystal compound A to a triangular wave voltage when a cell had an insulator film which was formed of $SiO_2$ and had a thickness of 40.0 nm and had a cell gap of 5 μm.

Fig. 14 shows an optical response of ferrielectric liquid crystal compound A to a triangular wave voltage when a cell had an insulator film which was formed of $SiO_2$ and had a thickness of 40.0 nm and had a cell gap of 10 μm.

**Claims**

**1.** An active matrix liquid crystal display device comprising two glass plates and an insulator layer formed of an insulator film and an alignment film, the insulator layer being formed on each glass plate,

wherein:

an pixel electrode and an active device connected to the pixel electrode are arranged, in a matrix state, on a first glass plate and a common electrode opposite to the pixel electrodes is arranged on a second glass plate, out of the two glass plates,

a gap between the first glass plate and the second glass plate is 1 to 3 μm, a liquid crystal having a layer structure is filled in the gap, the liquid crystal is a ferrielectric liquid crystal or a ferrielectric liquid crystal composition which can change among a co-present state of two ferrielectric phases, two ferroelectric states and an intermediate state therebetween by an action of an electric field when a voltage is applied between the pixel electrode and the common electrode,

crossed polarizers are arranged on the first glass plate and the second glass plate so as to bring the two ferroelectric states into a light state, and

an analog gray-scaling display is performed on the basis of a voltage change with a small width of hysteresis between a change from a ferrielectric state to a ferroelectric state and a change from a ferroelectric state to a ferrielectric state and without a threshold, by controlling a voltage applied between the pixel electrode and the common electrode.

**2.** The active matrix liquid crystal display device according to claim 1, wherein the first glass plate and the second

glass plate have a gap of 1 to 2 μm.

3. The active matrix liquid crystal display device according to claim 1 or 2, wherein the insulator layer is formed of any one of $SiO_2$, $ZrO_2$ and $Al_2O_3$.

4. The active matrix liquid crystal display device according to claim 1, 2 or 3, wherein the insulator layer has a thickness of 60 to 90 nm.

5. The active matrix liquid crystal display device according to claim 1, 2 or 3, wherein the insulator layer has a parameter P (P = d/ε) of 10 to 24 nm.

6. The active matrix liquid crystal display device according to claim 1, 2 or 3, wherein the insulator layer has a parameter P (P = d/ε) of 13 to 20 nm.

7. The active matrix liquid crystal display device according to any one of the preceding claims, wherein, when a transmission of the two ferroelectric states is taken as 100% and when a lowest transmission is taken as 0%, both a voltage (U90) at a transmission of 90% at a change from the co-present state of two ferrielectric phases to a ferroelectric state and a voltage (D90) at a transmission of 90% at a change from the ferroelectric state to the co-present state of two ferrielectric phases are 5 V or lower.

8. The active matrix liquid crystal display device according to claim 7, wherein a difference between the voltage (U90) at a transmission of 90% at a change from the co-present state of two ferrielectric phases to a ferroelectric state and the voltage (D90) at a transmission of 90% at a change from the ferroelectric state to the co-present state of two ferrielectric phases (the difference between U90 and D90) is 0.6 V or less.

9. The active matrix liquid crystal display device according to any one of the preceding claims, wherein the ferrielectric liquid crystal is a ferrielectric liquid crystal of the formula

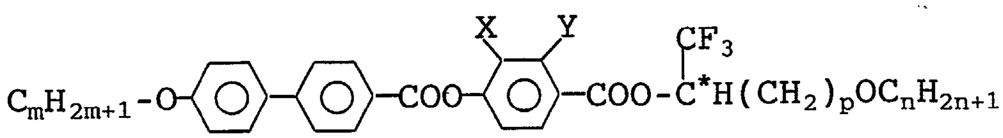

(1)

in which m is 9 to 12, p is 2 to 4, n is 2 to 4, and each of X and Y is a hydrogen atom, or one of X and Y is a fluorine atom and the other is a hydrogen atom,
or the ferrielectric liquid crystal composition contains the above ferrielectric liquid crystal.

10. The active matrix liquid crystal display device according to claim 9, wherein a helical pitch of the ferrielectric liquid crystal or the ferrielectric liquid crystal composition is at least 1 μm.

FIG. 1

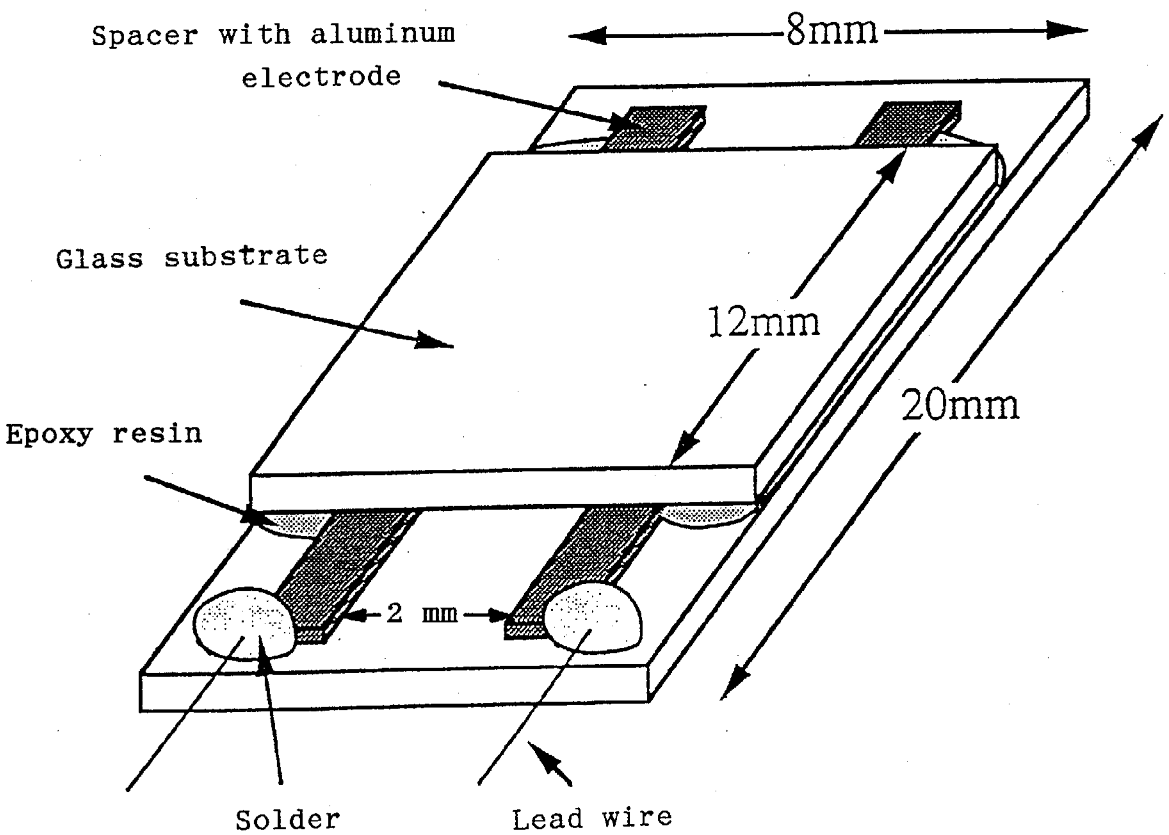
Spacer with aluminum electrode
8mm
Glass substrate
12mm
20mm
Epoxy resin
2 mm
Solder
Lead wire

F I G. 2

A－1

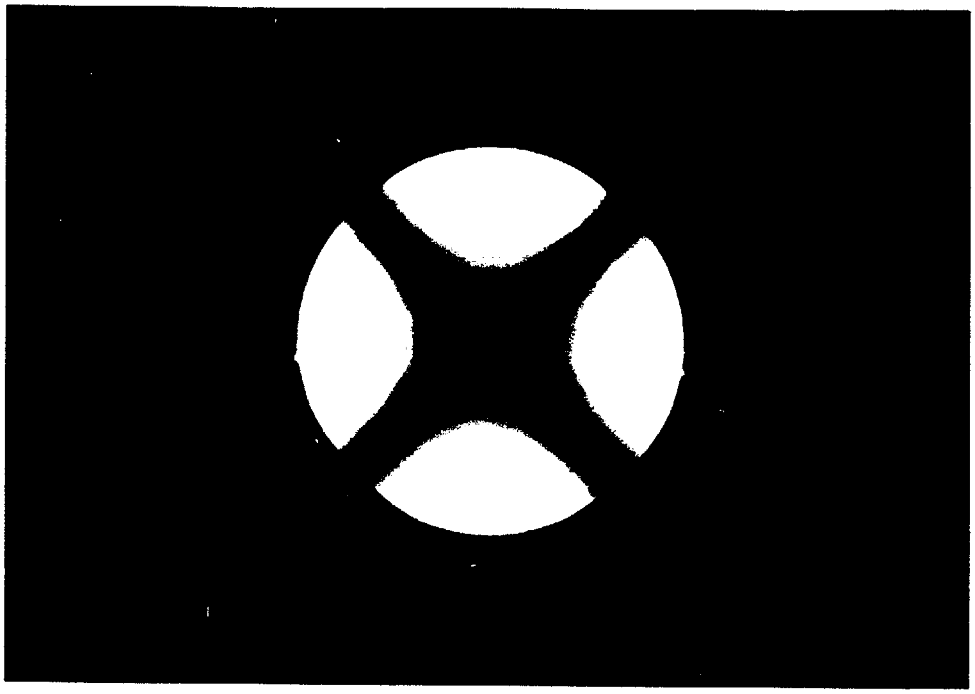

A－2

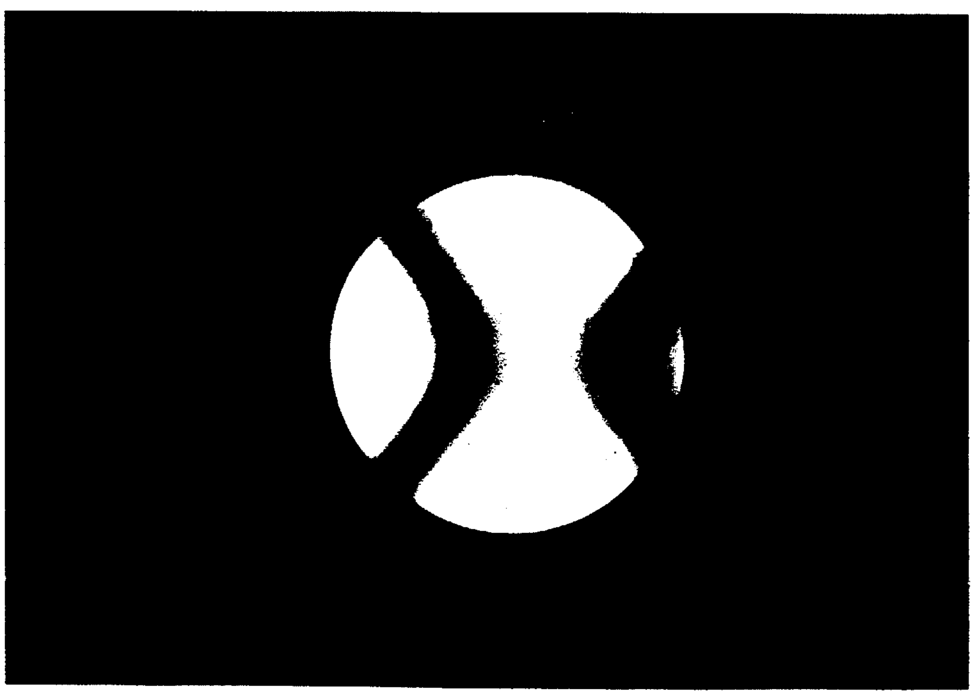

FIG. 2

B-1

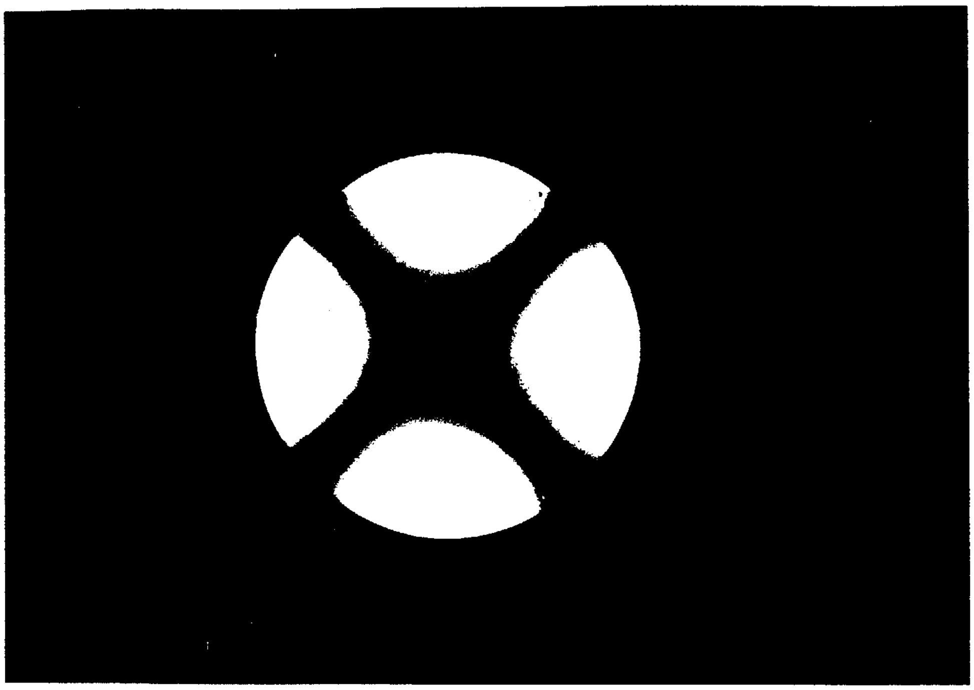

B-2

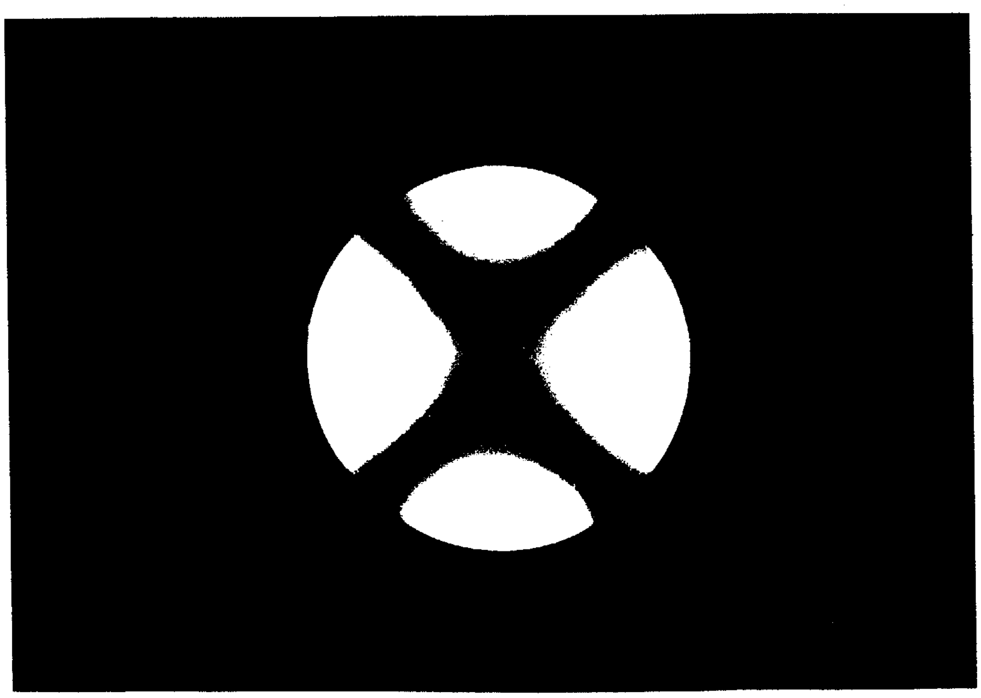

F I G. 2

C－1

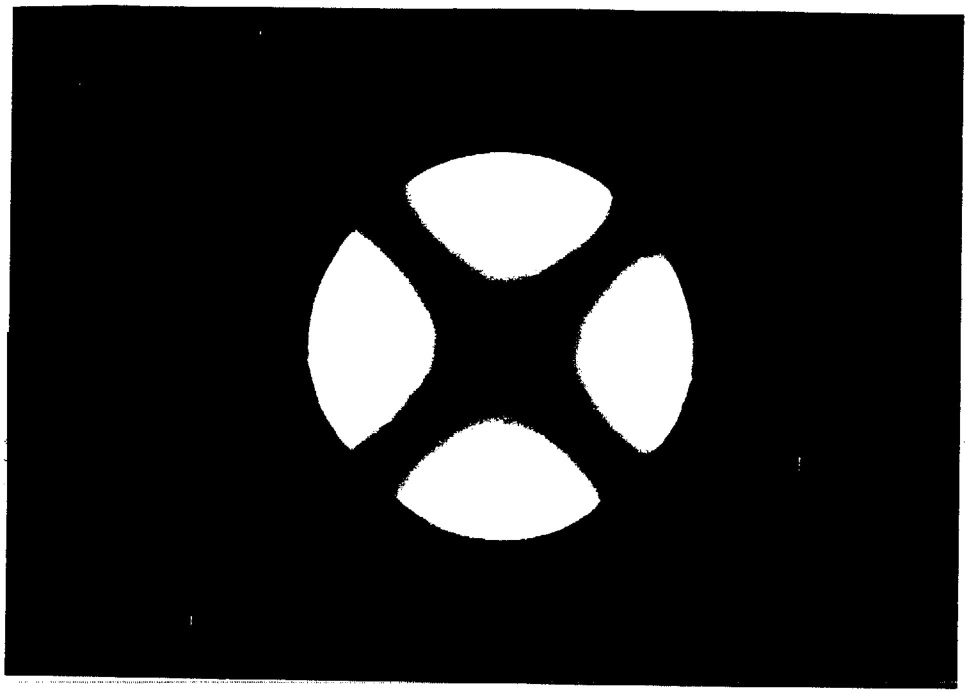

C－2

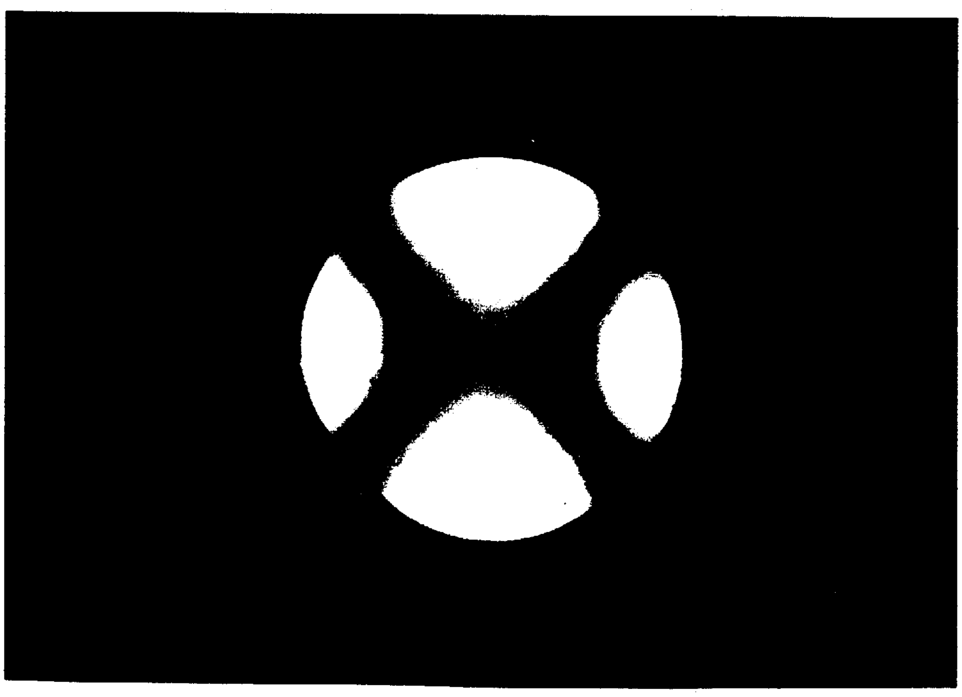

FIG. 2

D-1

D-2

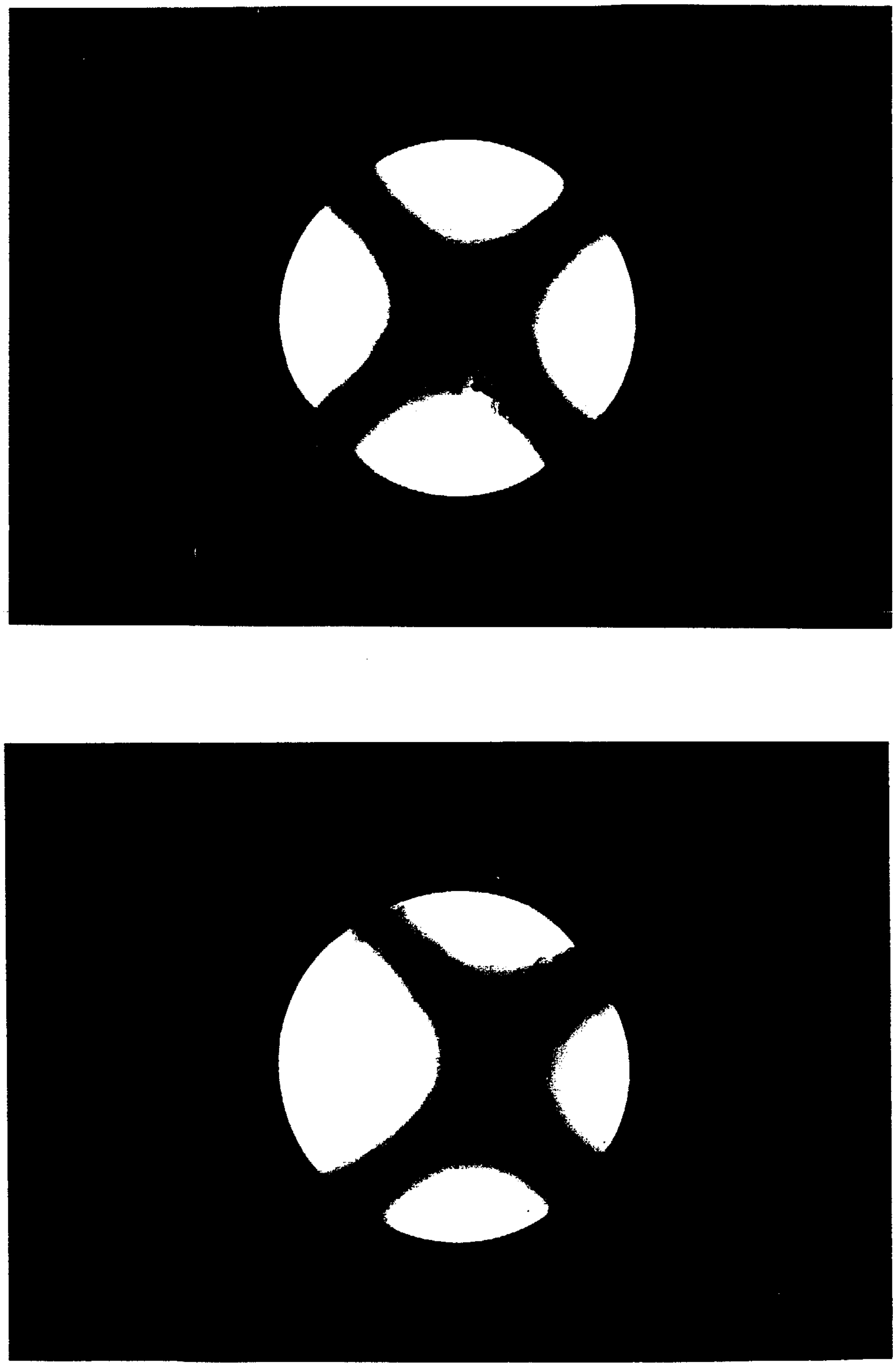

FIG. 3

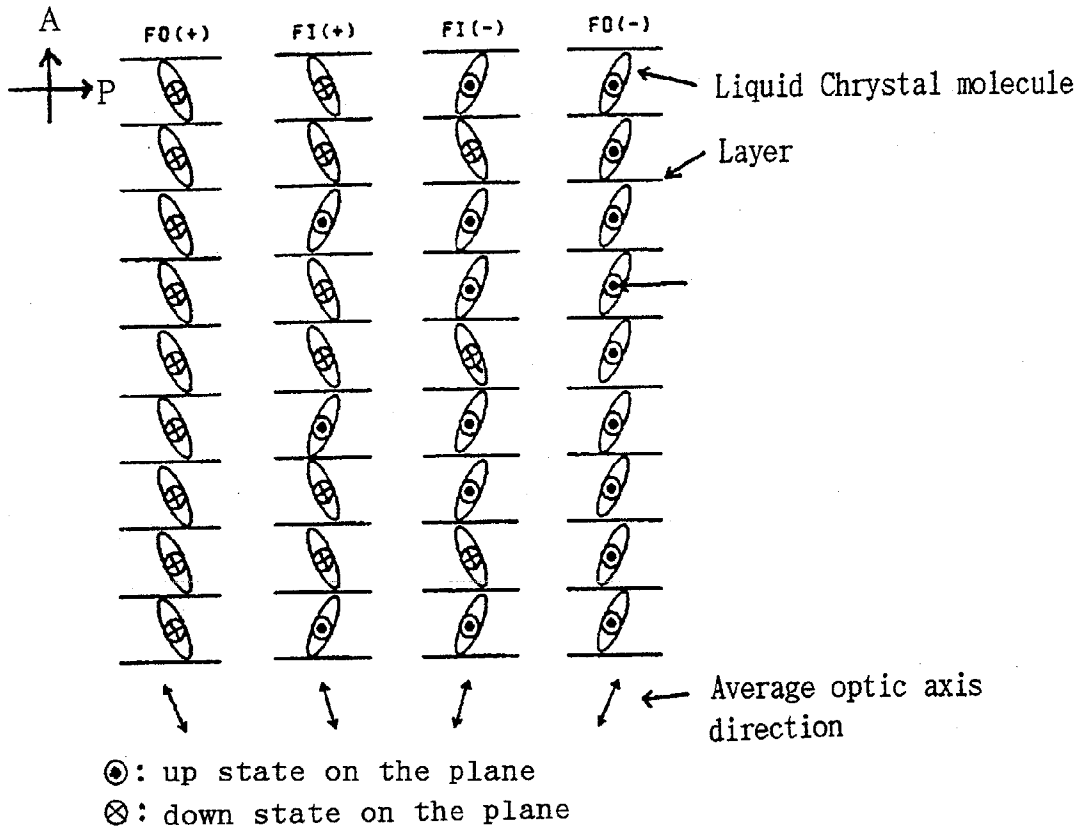
A
P
FO(+)
FI(+)
FI(-)
FO(-)
Liquid Chrystal molecule
Layer
Average optic axis direction
⊙: up state on the plane
⊗: down state on the plane

FIG. 4

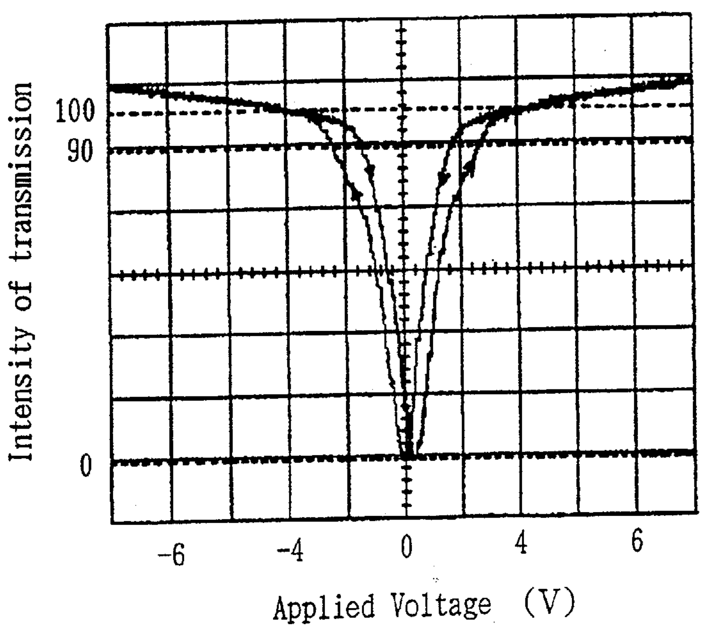
Intensity of transmission
100
90
0
-6
-4
0
4
6
Applied Voltage (V)

FIG. 5

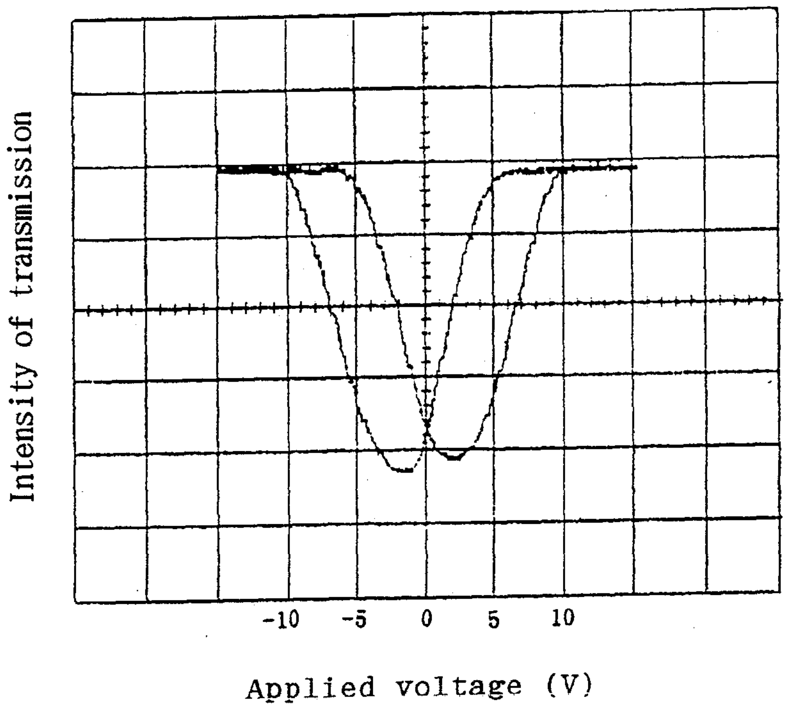
Intensity of transmission
-10
-5
0
5
10
Applied voltage (V)

FIG. 6

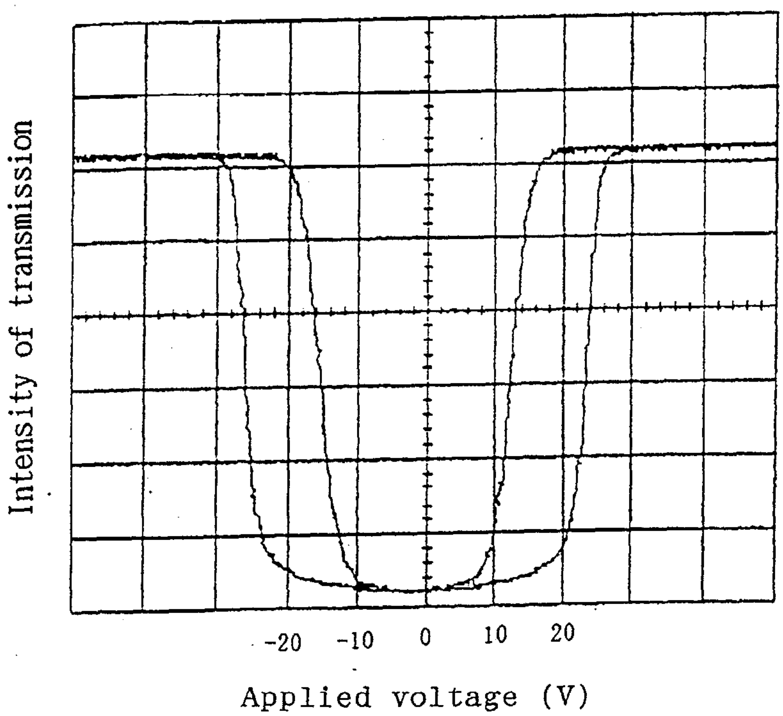
Intensity of transmission
-20
-10
0
10
20
Applied voltage (V)

FIG. 7

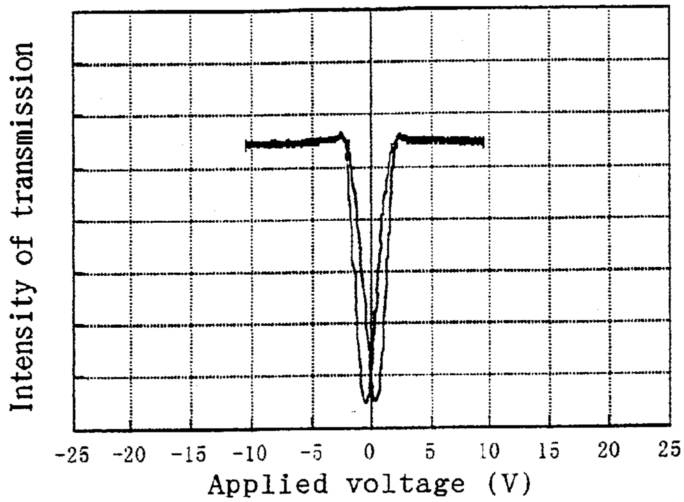


FIG. 8

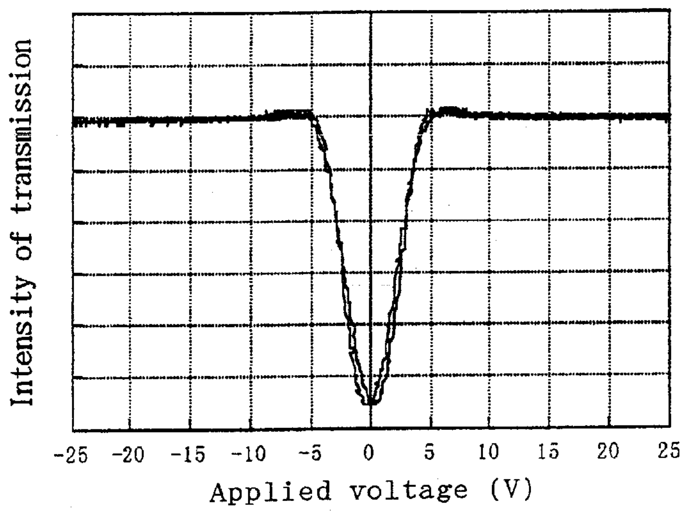


FIG. 9

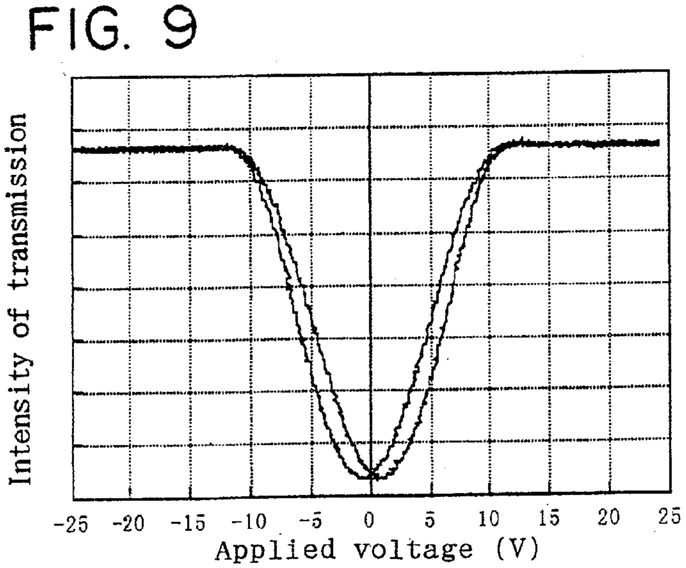

FIG. 10

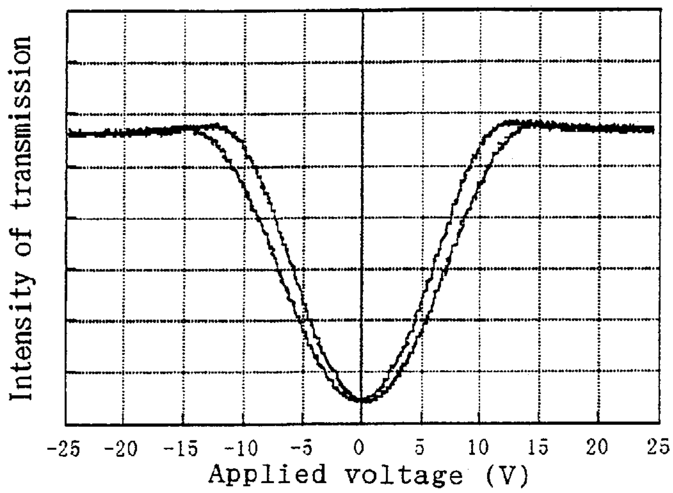


FIG. 11

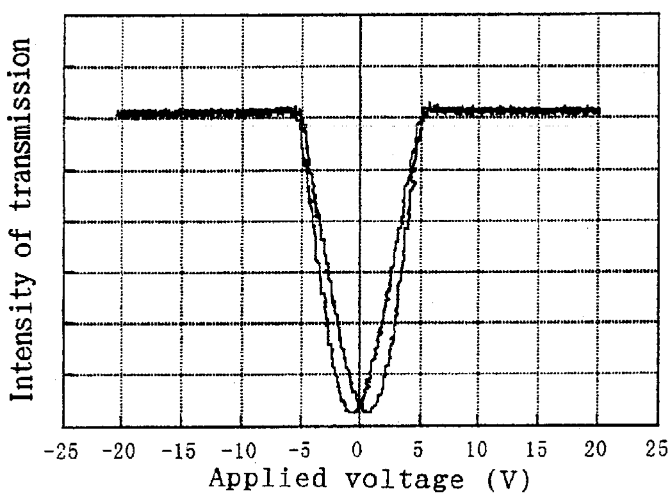


FIG. 12

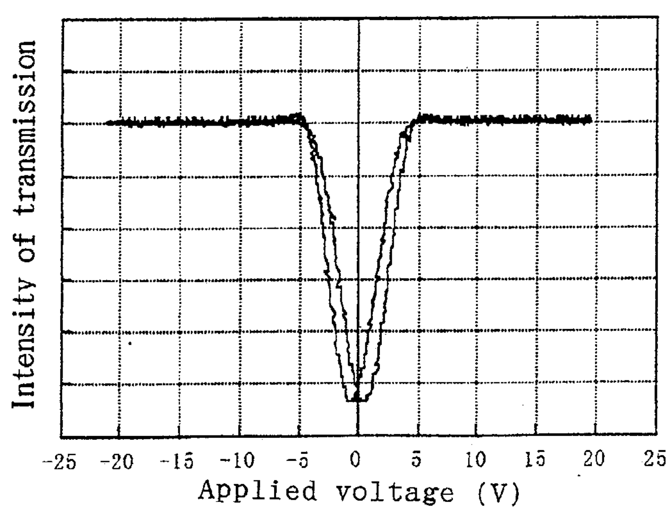

FIG. 13

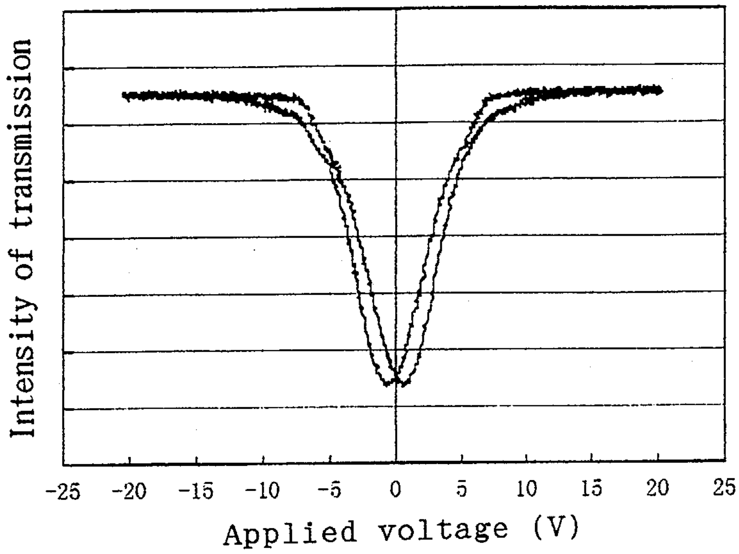
Intensity of transmission
-25
-20
-15
-10
-5
0
5
10
15
20
25
Applied voltage (V)

FIG. 14

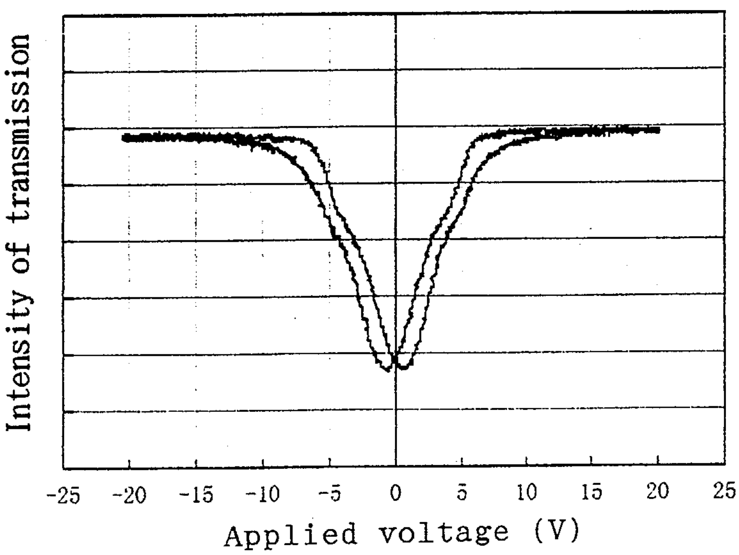
Intensity of transmission
-25
-20
-15
-10
-5
0
5
10
15
20
25
Applied voltage (V)